(19) Europäisches Patentamt
European Patent Office
Office européen des brevets

(11) **EP 1 516 325 B1**

(12) **EUROPEAN PATENT SPECIFICATION**

(45) Date of publication and mention of the grant of the patent:
**14.05.2008 Bulletin 2008/20**

(51) Int Cl.:
*G11B 7/24* *(2006.01)*       *G11B 23/00* *(2006.01)*
*G11B 23/30* *(2006.01)*       *G11B 13/00* *(2006.01)*

(21) Application number: **03735880.1**

(22) Date of filing: **04.06.2003**

(86) International application number:
**PCT/IB2003/002490**

(87) International publication number:
**WO 2003/107337 (24.12.2003 Gazette 2003/52)**

(54) **CHIP ON DISC RECORD CARRIER WITH INTEGRATED POWER SUPPLY**

INTEGRIERTER SCHALTKREIS AUF AUFZEICHNUNGSMEDIUM MIT INTEGRIERTER STROMVERSORGUNG

SUPPORT D'ENREGISTREMENT PUCE SUR DISQUE A ALIMENTATION INTEGREE

(84) Designated Contracting States:
**AT BE BG CH CY CZ DE DK EE ES FI FR GB GR HU IE IT LI LU MC NL PT RO SE SI SK TR**

(30) Priority: **14.06.2002 EP 02077385**

(43) Date of publication of application:
**23.03.2005 Bulletin 2005/12**

(73) Proprietor: **Koninklijke Philips Electronics N.V.**
**5621 BA Eindhoven (NL)**

(72) Inventors:
• **KAHLMAN, Josephus, A., H., M.**
**NL-5656 AA Eindhoven (NL)**
• **PAULUSSEN, Igor, W., F.**
**NL-5656 AA Eindhoven (NL)**

(74) Representative: **van Liempd, Jan**
**Philips**
**Intellectual Property & Standards**
**P.O. Box 220**
**5600 AE Eindhoven (NL)**

(56) References cited:
**EP-A- 0 996 124          GB-A- 2 349 501**
**US-A- 5 940 363          US-A- 6 044 046**
**US-A1- 2002 024 905**

**Description**

The invention relates to a system for rendering information from a record carrier, the system comprising a record carrier comprising a track for carrying marks representing the information, and a device for reading the information from the track. The record carrier comprises an integrated circuit comprising communication means for contactlessly communicating with the device. The device comprises a head for reading the marks, and communication means for contactlessly communicating with the integrated circuit.

A device and record carrier for rendering information are known from EP 0 966 124. The disc-shaped record carrier is provided with an integrated circuit constituting a memory for recording additional data, e.g. record management data. The integrated circuit has associated electromagnetic coupling means for transacting the record management data and receiving supply power from a recording and/or reproduction apparatus. The coupling means are built in an annular spiral form on the disc or in the integrated circuit. In the first embodiment a lower transmission frequency is used and a large inductance is needed. Hence the arrangement in the annular form requires a large coil and connecting the coil to the integrated circuit via bonding pads. Such a connection increases the cost of production of the record carrier and is less reliable. In the second embodiment a high transmission frequency is used and the electromagnetic coupling means are arranged like a HF antenna on the integrated circuit. Using a high frequency band for transmitting the supply power to the integrated circuit has the problem that a powerful HF source must be included in the device. Such a HF source needs relatively much power to transit enough power to the integrated circuit because of the low efficiency of transmission, and is limited to frequency bands made available for such purposes. Only limited ranges of frequencies have been made available by governments for home use, and the ranges may differ around the globe. Further such a HF source may cause interference with other electronic circuits in its vicinity.

It is noted that US 6,044,056 describes an optical disk carrying a chip and a power supply coil similar to EP 0 966 124. A power supply coil is provided around the central hole of a record carrier. A RF signal is proposed to transfer data and power to the coil using an RF electromagnetic field.

It is an object of the invention to provide a system for rendering information, which has a reliable power supply for the integrated circuit on the record carrier which does not interfere with other electronic circuits.

According to the present invention, there is provided a system for rendering information as defined in claim 1, a device for reading information as defined in claim 2, an integrated circuit as defined in claim 6, and a record carrier as defined in claim 9.

The measures have the effect that the power supply for the integrated circuit on the record carrier is directly and only available as soon as the record carrier is rotated at a predetermined minimum speed. This has the advantage that it is more difficult to access the integrated circuit for a malicious user trying to tamper with the content of the integrated circuit, e.g. security measures or access rights, because the record carrier has to be rotating and access to the integrated circuit can be controlled in the device. Further, compared to using a HF antenna integrated on the integrated circuit, there is no need to use any high frequency source for powering the chip. Using the magnetic field power supply frees up the available HF frequencies for communication and other use.

The invention is also based on the following recognition. The inventors have seen that a combination can be made of at least one small but powerful magnet of highly magnetical material, like NeFeBo alloy resulting a strength of around 1 Tesla, and integrated circuit process technology having low power requirements and several metal layers allowing coils of a substantial number of windings. Such combination provides just enough power at the speed of rotation currently used for record carriers like CD or DVD.

In an embodiment of the device the magnetic array is arranged to create the flux areas having a dimension in the direction of said movement of the integrated circuit of the same order of magnitude as the dimension of the integrated circuit. This has the effect that a large change of magnetic flux is achieved over a small displacement of the integrated circuit. This has the advantage that much supply power is generated at a relative low speed.

In an embodiment of the device the magnetic array is arranged to create the flux areas only along a circle segment substantially smaller than the full circle of the path traveled by the integrated circuit during said movement. This has the advantage that only a small number of magnets is required, which lowers the cost and simplifies the construction of the device. There is sufficient time for accessing the integrated circuit during the time within the circle segment, e.g. for performing an EEPROM write cycle.

In an embodiment of the record carrier the track is arranged on a conductive recording layer, and said layer is interrupted in an annular area containing the integrated circuit. The interruption may be perpendicular to the direction of movement or the layer may be omitted completely within the annular area. This has the advantage, that Eddy currents in the recording layer due to the magnetic field are reduced. Such Eddy currents might attenuate the magnetic flux from the magnet, might cause heating of the recording layer or have a braking effect on the rotation of the disc.

In an embodiment the integrated circuit comprises a speed detection unit for detecting the speed of a movement of the integrated circuit through a magnetic field having flux areas with positive and negative magnetic flux. This has the advantage that functions of the integrated circuit can be blocked if the speed is not within a required range. This increase the resistance against tampering with the contents of the integrated circuit by verifying that the record carrier is rotated at the required speed, or by preventing the integrated circuit to be driven at a too low or too high supply power level.

It is noted that EP 0 884 729 describes a record carrier having a chip which is powered by a coil in the record carrier and a static magnet in the device. However, the coil is not integrated on the chip and has a complicated multi-turn arrangement distributed over a large area of the record carrier to cover sufficient flux. The chip is connected to the coil via bonding pads. The magnet is dimensioned to cooperate with the large area of the coil.

These and other aspects of the invention will be apparent from and elucidated further with reference to the embodiments described by way of example in the following description and with reference to the accompanying drawings, in which

Figure 1 shows a record carrier including an integrated circuit,
Figure 2 shows a rendering device,
Figure 3 shows communicating between the integrated circuit and the device,
Figure 4 shows a record carrier and a magnetic array,
Figure 5 shows magnetic flux changes and induced voltage,
Figure 6 shows magnetic flux changes and induced voltage for multiple poles, and
Figure 7 shows a multipole magnetic array.

Corresponding elements in different Figures have identical reference numerals.

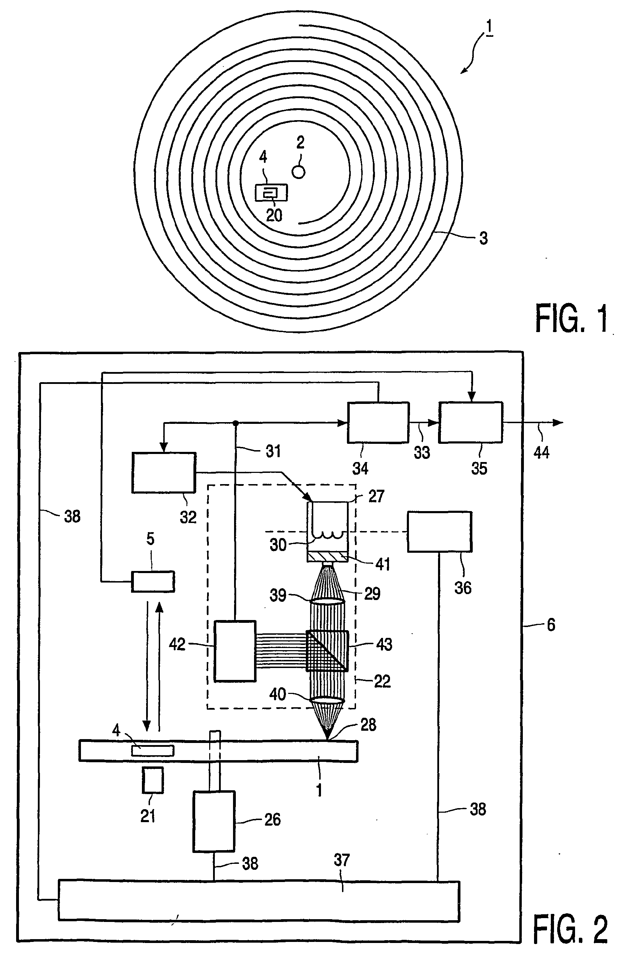

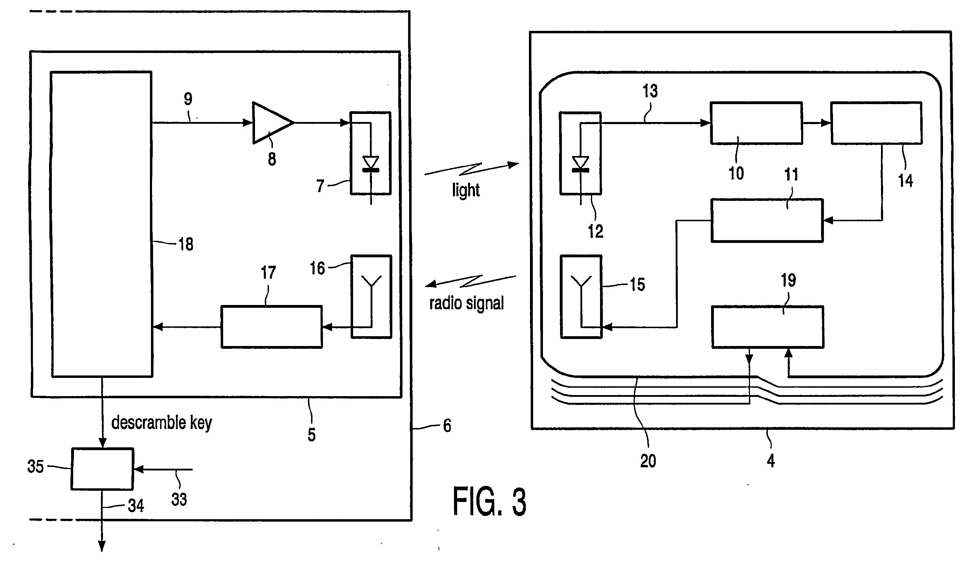

Fig. 1 shows a record carrier 1, with a central aperture 2 and a track 3. The track 3 is arranged in a spiral or concentric pattern and comprises a first area for storing information. The record carrier may be of a read-only type, e.g. containing optically readable information, or of a recordable type, e.g. CD-R or DVD+RW. A second area on the record carrier 1 comprises an integrated circuit 4 with transmitting means and receiving means for contactlessly transmitting and receiving additional information. For suitable transmitting means and receiving means, see Fig. 3 and its explanation. The integrated circuit 4 has a power supply coil 20 of a substantial amount of turns for generating supply power from low frequency magnetic flux changes.

Fig. 2 shows a device for reading the record carrier. The device 6 is equipped with drive means 26 for rotating the record carrier 1, and a read head 22 for reading the track 3 on the record carrier. The read head 22 comprises a radiation unit 27 and an optical system of a known type for generating a light spot 28 focused on the track of the record carrier by means of a beam 29. The beam 29 is generated by a radiation source 41, for example, an infrared laser diode having a wavelength of 780 nm. The optical system comprises optical elements such as a collimator lens 39 for collimating the beam, an objective lens 40 for focusing the beam, and a beam-splitting unit 43, e.g. a polarizing beam-splitting cube, a pellicle or a retarder. After having been reflected by the record carrier, the beam 29 is detected by a detector 42, e.g. a quadrant detector, which generates detector signals 31 such as, for example, a read signal, a tracking error signal and a focusing error signal. The device 6 has tracking means 32 which are coupled to the read head 22 for receiving the tracking error signal and for controlling a tracking actuator 30. The read head 22 comprises an actuator for focusing the beam 29 on the record carrier and the tracking actuator 30 for fine-positioning the light spot 28 in the radial direction in the center of the track. Following the track by means of the laser beam may also be effected by varying the position of the objective lens 40. During reading, the read signal is converted into output information in the read means 34, which is indicated by an arrow 33. The read means 34 comprise, for example, a channel decoder for converting the detected channel words into source words, and an error corrector for correcting errors which are present in the read signal. The device 6 further comprises positioning means 36 for coarse positioning of the read head 22 in the radial direction of the track, and a system control unit 37 for receiving commands from a controlling computer system or from a user, and for controlling the device by means of control lines 38, for example, a system bus connected to the drive means 26, the positioning means 36, the tracking means 32 and the read means 34. To this end, the system control unit 37 comprises a control circuit, for example, a microprocessor, a program memory and control gates for performing the procedures as described below. The system control unit 37 may also be implemented in a state machine in logic circuits.

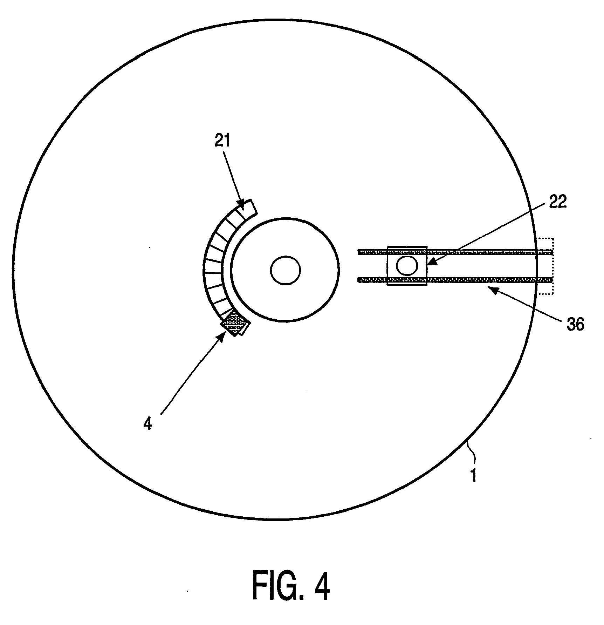

The device 6 comprises a magnetic array 21 having a plurality of poles for generating a static magnetic field having flux areas with positive and negative magnetic flux. In a basic embodiment the magnetic array has a single powerful magnet having two opposite magnetic poles pointing towards the integrated circuit, e.g. a shaped magnet or a rectangular magnet fitted in iron. The resulting magnetic field has a large change of flux over a small distance, and hence is suitable for generating power in the very small power supply coil 20 in the integrated circuit 4 on the record carrier. The drive means 26 rotate the record carrier and thereby move the integrated circuit 4 through the magnetic field. The power supply coil 20 generates supply power from the low frequency magnetic flux changes created by moving the integrated circuit 4 through the flux areas. Further embodiments of a magnetic array are shown in Figures 4, 5 and 6.

The device 6 further comprises receiving and transmitting means 5 for receiving and transmitting additional information stored in the integrated circuit 4 on the record carrier 1. In an embodiment, the additional information comprises a key for scrambling and/or descrambling the information. This descramble key is added to descrambling means 35.

The scrambled output information 33 is subsequently descrambled in these descrambling means and subsequently passed on, which is indicated by an arrow 44. This descrambled information may comprise, for example, audio or video information which may be displayed on an appropriate apparatus. It should be noted that the terms scrambling and descrambling of information are also understood to mean encrypting and decrypting. An embodiment of the device comprises write means for providing optically readable signs on a writable type record carrier such as, for example, a CD-R disc or a DVD+RW disc.

Fig. 3 shows communicating between the integrated circuit and the device. In the embodiment of the transmitting means 5 in the device 6, the transfer of data 9 to the integrated circuit 4 takes place via a driver 8 and a light-emitting diode (LED) 7. In the integrated circuit 4 the light coming from the LED 7 is collected by a photodiode 12 for producing received signal 13, which is applied to detector 10. The detector receives additional information from the device, which additional information is processed in processor 14, e.g. for storing in a memory or for use in a copy protection algorithm. In an embodiment, the copy protection algorithm is used for generating, in dependence on the received additional information, a descrambling key for descrambling the information on the record carrier. Output data from the integrated circuit 4, e.g. a descrambling key, may be applied to a radio transmitter 11 for transmitting the data to the device 6 through an antenna 15. The device 6 comprises a radio receiver 17 for receiving the data through an antenna 16. The data is applied to a processor 18, e.g. executing a copy protection algorithm or for outputting a key to descrambling means 35.

The integrated circuit 4 includes the power supply coil 20 which is coupled to a power supply circuit 19. The coil has a number of windings integrated on the metal layers of the integrated circuit. For generating supply power in a practical amount at least 10 windings are needed, but for current power requirements around 100 windings are required and feasible.

Figure 4 shows a record carrier and a magnetic array. The record carrier 1 is positioned in a device, of which only the optical head 22, the positioning sledge 36 and the magnetic array 21 are shown. It can be clearly seen that by rotating the record carrier 1 the integrated circuit (or chip) 4 is moved along the magnetic array 21. The magnetic array is only covering a part of the circle, in the embodiment a circle segment of about 111 degrees. Hence the magnetic array is roughly banana shaped. The chip is powered from the induced voltage in an on-chip inductor caused by the movement of the chip through the field of a permanent magnet. It is noted that the working distance between magnetic array and integrated circuit must be about the coil dimensions.

It is noted that Eddy currents might be induced in a conductive layer of the disk 1, in particular in the annular area containing the integrated circuit. Such Eddy currents can be attenuated by interrupting the recording layer around said area, e.g. by forming stripes, so that the Eddy currents encounter a high-ohmic path.

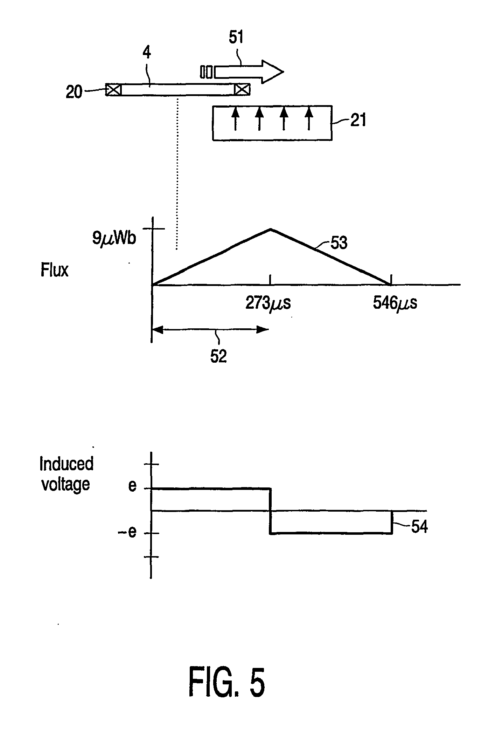

Figure 5 shows magnetic flux changes and induced voltage. On top the integrated circuit 4 including the coil 20 are shown to be moving along the magnetic array 21 by arrow 51. The total flux passing through the coil is indicated by flux curve 53. The resulting voltage induced in the coil 20 from a single magnetic pole is indicated by voltage curve 54. The generated power can be calculated as follows. For sake of simplicity it is assumed that the magnet pole dimensions are equal to the inner coil dimensions, so that every winding in the coil contains the total magnetic flux. The chip moves above a 3 x 3 mm pole of a 1 T (Wb/m$^2$) permanent magnet. A practical magnet consists of a NeFeBo alloy, and has a height to length ratio of about 5. On the chip, a N-turn inductor is integrated with inner dimensions of $l_{coil,inner} \times w_{coil,inner}$ = $3 \times 3mm$. Once per disk revolution, a flux pulse appears in the on-chip inductor. Positioned at 35 mm diameter and 100 Hz rotational frequency, the linear velocity amounts to $v = \pi \cdot d_{chip} \cdot f_{rot} = \pi \cdot 0.035 \cdot 100 = 11 m/s$.

It lasts $t_{on} = \dfrac{2 \cdot l_{coil,inner}}{v} = \dfrac{2 \cdot 0.003}{11} = 546 \mu s$ to move the chip completely in and out the magnetic field. Assuming the total magnet flux appears in the coil, the induced voltage equals to

$$e = -N \cdot \frac{d\Phi}{dt} = -N \cdot \frac{B \cdot A}{t} = -N \cdot \frac{1 \cdot 3 \cdot 10^{-3} \cdot 3 \cdot 10^{-3}}{273 \cdot 10^{-6}} = -N \cdot 0.033 \text{ Volt.}$$

To achieve $U_l$ = 2.5V at the load, $N = \dfrac{2 \cdot U_l}{e} = \dfrac{2 \cdot 2.5}{0.033} = 152 \text{ turns}$ are required.

Taking the width of the turns $W_{turn}$ = 3.9 $\mu$m and their spacing $w_{spacing}$ = 0.64 $\mu$m, the winding width becomes

$$W_{winding} = N \cdot \left(w_{turn} + w_{spacing}\right) = 152 \cdot \left(3.9 \cdot 10^{-6} + 0.64 \cdot 10^{-6}\right) = 0.7mm.$$

The required chip area is

$$\left(l_{coil,inner} + 2 \cdot W_{winding}\right) \times \left(w_{coil,inner} + 2 \cdot W_{winding}\right) = 4.4 \times 4.4mm = 19.3mm^2$$

The chip dimensions amount to 4.4 x 4.4 mm, where 3 x 3 mm in the centre is available for electronic components. The average dimensions of a turn in the coil are 3.7 x 3.7 mm, so that the average turn length equals to $l_{turn} = 4.3.7 = 14.8mm$. The available metal layers can be used in parallel. This brings the resistance of one turn to

$$R_{turn} \approx \frac{l_{turn}}{w_{turn}} \cdot R_{sheet,5layers} = \frac{14.8 \cdot 10^{-3}}{3.9 \cdot 10^{-6}} \cdot 12 \cdot 10^{-3} = 45\ \Omega.$$

The coil resistance becomes

$$R_{coil} = N \cdot R_{turn} = 152 \cdot 45 = 6822\Omega.$$

The maximum electrical load power $P_l$ comes available by choosing the load resistance $R_l$ equal to the coil resistance $R_{coil}$. In that case the electrical load power becomes

$$P_l = \frac{U_l^{\,2}}{R_l} \approx \frac{2.4^2}{6286} = 0.92mW.$$

The energy available during one revolution of the disk is

$$E_l = P_l \cdot t_{on} = 0.92 \cdot 10^{-3} \cdot 546 \cdot 10^{-6} = 500nJ,$$

and the average power

$$P_{av} = P_l \cdot \frac{t_{on}}{T_{rot}} = P_l \cdot t_{on} \cdot f_{rot} = 0.92 \cdot 10^{-3} \cdot 0.546 \cdot 10^{-3} \cdot 100 = 50\mu W.$$

The required chip area of 19 mm$^2$ is relatively large. When smaller electrical power is sufficient, the required coil resistance may increase, and the coil windings in the metal layers are serialized. After re-calculating the required chip area becomes 1.3 mm$^2$ and the pole dimensions are 0.7 x 0.7 mm for collecting 5 nJ per revolution. In an embodiment the chip is located at the outer diameter of the disk, e.g. 110 mm. Due to the higher linear velocity, the induction voltage increases and less turns are required.

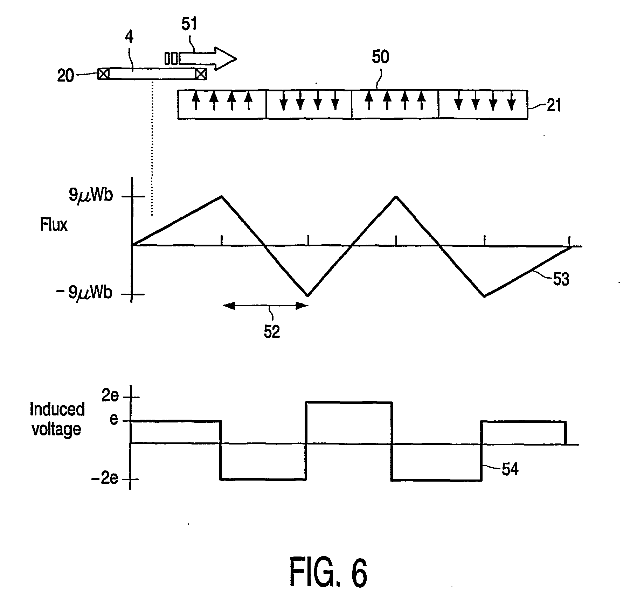

Figure 6 shows magnetic flux changes and induced voltage for multiple poles. On top the integrated circuit 4 including the coil 20 are shown to be moving along the magnetic array 21 by arrow 51. The magnetic array is shown having 4 magnetic poles 50 of alternating polarity, resulting in magnetic flux areas having positive and negative flux. The total flux passing through the coil is indicated by flux curve 53. The resulting voltage induced in the coil 20 is indicated by voltage curve 54. The chip moves over the poles of the permanent magnet array. Around the pole-borders, the direction of the received flux inverts, so that the flux step is two times larger compared to a single pole set-up. As a result the induced voltage doubles. Evidently, at the begin and at the end of the magnet, where the flux decreases to zero, half of the required voltage is induced. Using a 1 Tesla (= Wb/m2) permanent magnet having 34 poles of dimensions 1 x 1 mm, and a total chip area of 1.5 x 1.5 mm (2.26 mm2) it is possible to generate 300 $\mu$W at 1.8 Volt during 3 ms. In practice this is sufficient for writing data per disk revolution in a chip comprising a suitable memory, e.g. 16 Bytes in EEPROM. The position of the chip is chosen at 35mm diameter, and the rotation frequency at 100 Hz, which results in a speed of 11.0 m/s. The time for the flux change, called ramp time 52, is 0.091 ms for a magnet of 34 poles of 1 mm, resulting in an available 'on-time' of 3 ms, i.e. about 30 % of the rotation time. A coil of 164 turns and an induction voltage of 0.022 V/turn results in an open coil voltage of 3.60 Volt. The number of turns can be arranged using 5 metal layers and a chip area of around 2.3 mm2, and an average coil width and length of 1.25 mm. Using a load voltage of 1.8 Volt the power in the coil is 0.30 mW at an energy per revolution of 890 nJ, and an average power of 0.089 mW. The required IC area is quite practical, namely 2.3 mm2.

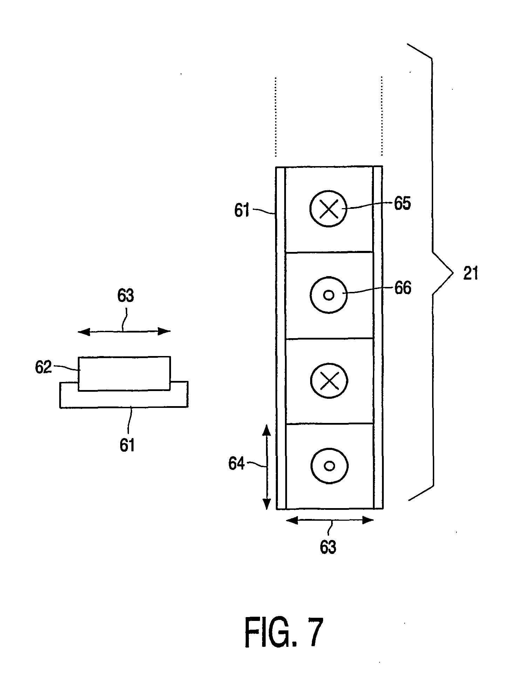

Figure 7 shows a multipole magnetic array. A rail 61 holds magnets 62 of a width 63 and a length 64. A number of magnets 62 and the rail constitute the magnetic array 21 having alternating north poles 65 and south poles 66. In a practical embodiment the array has 34 poles constituted by 1 Tesla magnets of NeFeBo alloy. The separate 1 x 1 mm magnets are magnetised, and fitted together in a banana shaped rail 61, e.g. constructed from iron.

Although the invention has been explained mainly by embodiments using an optical disc, similar embodiments like an optical card, can be used. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware. Further, the scope of the invention is limited only by the appended claims.

**Claims**

1. System for rendering information from a record carrier, the system comprising
   a record carrier (1) comprising a track for carrying marks representing the information, and
   a device (6) for reading the information from the track,
   which record carrier comprises a power supply coil for generating supply power and an integrated circuit (4) comprising communication means for contactlessly communicating with the device, and
   which device comprises

   - a head (22) for reading the marks,
   - communication means (5) for contactlessly communicating with the integrated circuit (4),
   - a magnet for generating a static magnetic field for cooperating with the power supply coil, and
   - drive means (26) for rotating the record carrier for scanning the track via the head (22), and for moving the power supply coil through the magnetic field for creating low frequency magnetic flux changes,

   **characterized in that**
   the magnet comprises a multipole magnetic array (21) having a plurality of poles for generating the static magnetic field having multiple areas with positive magnetic flux and multiple areas with negative magnetic flux, and
   the integrated circuit comprises the power supply coil for generating supply power from a plurality of the low frequency magnetic flux changes corresponding to said multiple areas with positive magnetic flux and multiple areas with negative magnetic flux.

2. Device for reading information from a record carrier having a track carrying marks representing the information, which record carrier comprises a power supply coil for generating supply power and an integrated circuit (4) comprising communication means for contactlessly communicating with the device, which device comprises

   - a head (22) for reading the marks,
   - communication means (5) for contactlessly communicating with the integrated circuit (4),
   - a magnet for generating a static magnetic field for cooperating with the power supply coil, and
   - drive means (26) for rotating the record carrier for scanning the track via the head (22) and for moving power supply coil through the flux areas for creating the low frequency magnetic flux changes,

   **characterized in that**
   the magnet comprises a multipole magnetic array (21) having a plurality of poles for generating the static magnetic field having multiple areas with positive magnetic flux and multiple areas with negative magnetic flux, and

the integrated circuit comprises the power supply coil for generating supply power from a plurality of the low frequency magnetic flux changes corresponding to said multiple areas with positive magnetic flux and multiple areas with negative magnetic flux.

3. Device as claimed in claim 2, wherein the magnetic array (21) is arranged to create the flux areas having a dimension in the direction of said movement of the integrated circuit (4) of the same order of magnitude as the dimension of the integrated circuit (4).

4. Device as claimed in claim 2, wherein the magnetic array (21) is arranged to create the flux areas only along a circle segment smaller than the full circle of the path traveled by the integrated circuit (4) during said movement.

5. Device as claimed in claim 2, wherein the magnetic array (21) comprises a plurality of rectangular magnets fitted in a magnetically conducting rail.

6. Integrated circuit, which integrated circuit (4) comprises communication means for contactlessly communicating with a device and a power supply coil for generating supply power from low frequency magnetic flux changes created by moving the integrated circuit (4) through a magnetic field,
**characterized in that**,
the magnetic field is a static magnetic field having multiple areas with positive magnetic flux and multiple areas with negative magnetic flux, and
the integrated circuit comprises the power supply coil for generating supply power from a plurality of the low frequency magnetic flux changes when moving through said multiple areas with positive magnetic flux and multiple areas with negative magnetic flux.

7. Integrated circuit as claimed in claim 6, wherein the power supply coil has at least 10 windings.

8. Integrated circuit as claimed in claim 6, wherein the integrated circuit comprises a speed detection unit for detecting the speed of a movement of the integrated circuit through a magnetic field having flux areas with positive and negative magnetic flux.

9. Record carrier comprising a track for carrying marks representing information, which record carrier comprises the integrated circuit (4) as claimed in any one of the claims 6 to 8.

10. Record carrier as claimed in claim 9, wherein the track is arranged on a conductive recording layer, and said layer is interrupted in an annular area containing the integrated circuit (4).

**Patentansprüche**

1. System zum Aufbereiten von Informationen von einem Aufzeichnungsträger, wobei das System umfasst:

   einen Aufzeichnungsträger (1), der eine Spur zum Tragen von Markierungen, welche die Informationen repräsentieren, umfasst, und
   eine Einrichtung (6) zum Lesen der Informationen von der Spur,
   wobei der Aufzeichnungsträger eine Stromversorgungsspule zum Erzeugen von Versorgungsstrom und eine Kommunikationsmittel zum kontaktlosen Kommunizieren mit der Einrichtung umfassende integrierte Schaltung (4) umfasst, und

   wobei die Einrichtung umfasst:

   - einen Kopf (22) zum Lesen der Markierungen,
   - Kommunikationsmittel (5) zum kontaktlosen Kommunizieren mit der integrierten Schaltung (4),
   - einen Magneten zum Erzeugen eines statischen Magnetfeldes zum Zusammenwirken mit der Stromversorgungsspule, und
   - Antriebsmittel (26) zum Versetzen des Aufzeichnungsträgers in Rotation zum Abtasten der Spur mittels des Kopfes (22) und zum Bewegen der Stromversorgungsspule durch das Magnetfeld hindurch zum Erzeugen niederfrequenter Magnetflussänderungen,

**dadurch gekennzeichnet, dass**
der Magnet eine mehrpolige magnetische Anordnung (21) umfasst, die mehrere Pole zum Erzeugen des statischen Magnetfeldes aufweist, das mehrere Bereiche mit positivem Magnetfluss und mehrere Bereiche mit negativem Magnetfluss aufweist, und
die integrierte Schaltung die Stromversorgungsspule zum Erzeugen von Versorgungsstrom aus einer Vielzahl der niederfrequenten Magnetflussänderungen umfasst, die den mehreren Bereichen mit positivem Magnetfluss und mehreren Bereichen mit negativem Magnetfluss entsprechen.

2. Einrichtung zum Lesen von Informationen von einem Aufzeichnungsträger, der eine Spur aufweist, die Markierungen trägt, welche die Informationen repräsentieren, wobei der Aufzeichnungsträger eine Stromversorgungsspule zum Erzeugen von Versorgungsstrom und eine Kommunikationsmittel zum kontaktlosen Kommunizieren mit der Einrichtung umfassende integrierte Schaltung (4) umfasst, wobei die Einrichtung umfasst:

    - einen Kopf (22) zum Lesen der Markierungen,
    - Kommunikationsmittel (5) zum kontaktlosen Kommunizieren mit der integrierten Schaltung (4),
    - einen Magneten zum Erzeugen eines statischen Magnetfeldes zum Zusammenwirken mit der Stromversorgungsspule, und
    - Antriebsmittel (26) zum Versetzen des Aufzeichnungsträgers in Rotation zum Abtasten der Spur mittels des Kopfes (22) und zum Bewegen der Stromversorgungsspule durch die Magnetflussbereiche hindurch zum Erzeugen der niederfrequenten Magnetflussänderungen,

    **dadurch gekennzeichnet, dass**
    der Magnet eine mehrpolige magnetische Anordnung (21) umfasst, die mehrere Pole zum Erzeugen des statischen Magnetfeldes aufweist, das mehrere Bereiche mit positivem Magnetfluss und mehrere Bereiche mit negativem Magnetfluss aufweist, und
    die integrierte Schaltung die Stromversorgungsspule zum Erzeugen von Versorgungsstrom aus einer Vielzahl der niederfrequenten Magnetflussänderungen umfasst, die den mehreren Bereichen mit positivem Magnetfluss und mehreren Bereichen mit negativem Magnetfluss entsprechen.

3. Einrichtung nach Anspruch 2, wobei die magnetische Anordnung (21) so eingerichtet ist, dass sie die Magnetflussbereiche mit einer Abmessung in der Richtung der Bewegung der integrierten Schaltung (4) von derselben Größenordnung wie die Abmessung der integrierten Schaltung (4) erzeugt.

4. Einrichtung nach Anspruch 2, wobei die magnetische Anordnung (21) so eingerichtet ist, dass sie die Magnetflussbereiche nur entlang eines Kreissegments erzeugt, das kleiner als der vollständige Kreis des Weges ist, der von der integrierten Schaltung (4) während dieser Bewegung zurückgelegt wird.

5. Einrichtung nach Anspruch 2, wobei die magnetische Anordnung (21) mehrere rechteckige Magnete umfasst, die in eine magnetisch leitende Schiene eingepasst sind.

6. Integrierte Schaltung, wobei die integrierte Schaltung (4) Kommunikationsmittel zum kontaktlosen Kommunizieren mit einer Einrichtung und eine Stromversorgungsspule zum Erzeugen von Versorgungsstrom aus niederfrequenten Magnetflussänderungen, die durch Bewegen der integrierten Schaltung (4) durch ein Magnetfeld hindurch erzeugt werden, umfasst,
**dadurch gekennzeichnet, dass**
das Magnetfeld ein statisches Magnetfeld ist, das mehrere Bereiche mit positivem Magnetfluss und mehrere Bereiche mit negativem Magnetfluss aufweist, und
die integrierte Schaltung die Stromversorgungsspule zum Erzeugen von Versorgungsstrom aus einer Vielzahl der niederfrequenten Magnetflussänderungen umfasst, wenn sie sich durch die mehreren Bereiche mit positivem Magnetfluss und mehreren Bereiche mit negativem Magnetfluss hindurch bewegt.

7. Integrierte Schaltung nach Anspruch 6, wobei die Stromversorgungsspule mindestens 10 Wicklungen aufweist.

8. Integrierte Schaltung nach Anspruch 6, wobei die integrierte Schaltung eine Geschwindigkeits-Detektionseinheit zum Detektieren der Geschwindigkeit einer Bewegung der integrierten Schaltung durch ein Magnetfeld hindurch, das Magnetflussbereiche mit positivem und negativem Magnetfluss aufweist, umfasst.

9. Aufzeichnungsträger, der eine Spur zum Tragen von Markierungen, welche Informationen repräsentieren, umfasst, wobei der Aufzeichnungsträger die integrierte Schaltung (4) nach einem der Ansprüche 6 bis 8 umfasst.

10. Aufzeichnungsträger nach Anspruch 9, wobei die Spur auf einer leitenden Aufzeichnungsschicht angeordnet ist und diese Schicht in einem ringförmigen Bereich unterbrochen ist, der die integrierte Schaltung (4) enthält.

**Revendications**

1. Système pour restituer des informations d'un support d'enregistrement, le système comprenant :

un support d'enregistrement (1) comprenant une piste destinée à porter des repères représentant les informations, et
un dispositif (6) pour lire les informations de la piste,
lequel support d'enregistrement comprend une bobine d'alimentation pour générer une puissance d'alimentation et un circuit intégré (4) comprenant des moyens de communication pour établir une communication sans contact avec le dispositif, lequel dispositif comprend :

- une tête (22) pour lire les repères,
- des moyens de communication (5) pour établir une communication sans contact avec le circuit intégré (4),
- un aimant pour générer un champ magnétique statique pour coopérer avec la bobine d'alimentation, et
- des moyens d'entraînement (26) pour faire tourner le support d'enregistrement pour le balayage de la piste via la tête (22), et pour déplacer la bobine d'alimentation à travers le champ magnétique afin de créer des variations de flux magnétique à basse fréquence,

**caractérisé en ce que**
l'aimant comprend un réseau magnétique multipolaire (21) ayant une pluralité de pôles pour générer le champ magnétique statique, ayant de multiples zones à flux magnétique positif et de multiples zones à flux magnétique négatif, et
le circuit intégré comprend la bobine d'alimentation pour générer une puissance d'alimentation à partir d'une pluralité de variations de flux magnétique à basse fréquence correspondant auxdites zones multiples à flux magnétique positif et auxdites zones multiples à flux magnétique négatif.

2. Dispositif de lecture d'informations sur un support d'enregistrement ayant une piste supportant des repères représentant les informations, lequel support d'enregistrement comprend une bobine d'alimentation pour générer une puissance d'alimentation et un circuit intégré (4) comprenant des moyens de communication pour établir une communication sans contact avec le dispositif, lequel dispositif comprend :

- une tête (22) pour lire les repères,
- des moyens de communication (5) pour établir une communication sans contact avec le circuit intégré (4),
- un aimant pour générer un champ magnétique statique pour coopérer avec la bobine d'alimentation, et
- des moyens d'entraînement (26) pour faire tourner le support d'enregistrement pour le balayage de la piste via la tête (22) et pour déplacer la bobine d'alimentation à travers les zones de flux afin de créer les variations de flux magnétique à basse fréquence,

**caractérisé en ce que**
l'aimant comprend un réseau magnétique multipolaire (21) avec une pluralité de pôles pour générer le champ magnétique statique, ayant de multiples zones à flux magnétique positif et de multiples zones à flux magnétique négatif, et
le circuit intégré comprend la bobine d'alimentation pour générer une puissance d'alimentation à partir d'une pluralité de variations de flux magnétique à basse fréquence correspondant auxdites zones multiples à flux magnétique positif et auxdites zones multiples à flux magnétique négatif.

3. Dispositif selon la revendication 2, dans lequel le réseau magnétique (21) est aménagé pour créer les zones de flux ayant une dimension dans la direction dudit mouvement du circuit intégré (4) du même ordre de grandeur que la dimension du circuit intégré (4).

4. Dispositif selon la revendication 2, dans lequel le réseau magnétique (21) est aménagé pour créer les zones de flux uniquement le long d'un segment de cercle plus petit que le cercle entier du chemin parcouru par le circuit intégré (4) pendant ledit mouvement.

5. Dispositif selon la revendication 2, dans lequel le réseau magnétique (21) comprend une pluralité d'aimants rectangulaires insérés dans un rail magnétoconducteur.

6. Circuit intégré (4), lequel circuit intégré (4) comprend des moyens de communication pour établir une communication sans contact avec un dispositif et une bobine d'alimentation pour générer une puissance d'alimentation à partir de variations de flux magnétique à basse fréquence en déplaçant le circuit intégré (4) à travers un champ magnétique, **caractérisé en ce que** :

le champ magnétique est un champ magnétique statique ayant de multiples zones à flux magnétique positif et de multiples zones à flux magnétique négatif, et

le circuit intégré comprend la bobine d'alimentation pour générer une puissance d'alimentation à partir d'une pluralité de variations de flux magnétique à basse fréquence, lorsqu'il se déplace à travers lesdites zones multiples à flux magnétique positif et lesdites zones multiples à flux magnétique négatif.

7. Circuit intégré selon la revendication 6, dans lequel la bobine d'alimentation a au moins 10 enroulements.

8. Circuit intégré selon la revendication 6, dans lequel le circuit intégré comprend une unité de détection de vitesse destinée à détecter la vitesse d'un mouvement du circuit intégré à travers un champ magnétique ayant des zones de flux à flux magnétique positif et des zones de flux à flux magnétique négatif.

9. Support d'enregistrement comprenant une piste destinée à porter des repères représentant des informations, lequel support d'enregistrement comprend le circuit intégré (4) selon l'une quelconque des revendications 6 à 8.

10. Support d'enregistrement selon la revendication 9, dans lequel la piste est aménagée sur une couche d'enregistrement conductrice et ladite couche est interrompue dans une zone annulaire contenant le circuit intégré (4).

FIG. 1

FIG. 2

FIG. 3

FIG. 4

51

4

20

21

9μWb

Flux

53

273μs    546μs

52

Induced
voltage

e

-e

54

FIG. 5

FIG. 6

FIG. 7

**EP 1 516 325 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0966124 A
- US 6044056 A
- EP 0884729 A